# EUROPEAN PATENT APPLICATION

(11) **EP 2 306 119 A2**
(43) Date of publication of application: **06.04.2011**
(21) Application number: 10175693.0
(22) Date of filing: 08.09.2010
(51) Int. Cl.: F24J 3/08

(54) **Geothermal heating and cooling management system**

(30) Priority: 16.09.2009 US 560564
(71) Applicant: General Electric Company, Schenectady, NY 12345 (US)
(72) Inventor: Teichmann, Ralph, Schenectady, NY 12345 (US); Altenschulte, Markus, 48499, Salzbergen (DE)
(74) Representative: Bedford, Grant Richard

(57) **Abstract**

The present application provides a geothermal heating and cooling system (100) for a solar power conversion system (40) within an enclosure (65). The geothermal heating and cooling system (100) includes a heat exchanger (140) positioned about the power conversion system (40) and within the enclosure (65), one or more pipes (110) positioned within the ground (120), and a heat transfer medium (150) circulating within the heat exchanger (140) and the pipes (110) so as to transfer heat between the power conversion system (40) and the ground (120).

## Description

The present application relates generally to the thermal management of outdoor power conversion equipment and related components and more particularly relates to the use of a geothermal cooling and heating system with a solar power conversion system.

Power conversion equipment installed and positioned about generating devices has become more and more widespread. Examples include solar power converters and utility grade transmission systems. Power conversion equipment may be used to convert power from a direct current ("DC") power source, such as from a fuel cell or a photovoltaic cell, to a utility grid. Power conversion equipment installed outdoors also may be used to stabilize alternating current ("AC") transmission systems by providing real or reactive power, as well as converting AC power into DC power and vice versa for power transmission purposes. Power conversion systems also may be installed in adverse outdoor conditions so as to control electric machines, such as compressors or pumps in oil and gas applications.

Power conversion systems generally require constant thermal management. Such management may be challenging because, among other reasons, the outdoor power conversion equipment typically is exposed to extreme cold, substantial solar heating, and/or dusty environments that may require heavy filtering of any air flow used to cool sensitive electronics. Thermal management also may be dependent on the actual installation conditions. For example, altitude may impact air density which in turn impacts the cooling capacity of a conventional thermal management system. The maximum inlet temperature and the flow conditions of the cooling media may determine the maximum power transferred and/or the cost and size of an inverter and similar power conversion components for a given power level. Further, the power conversion components also may need to be preheated in colder environments and the like during start up and other conditions.

Existing power conversion equipment typically may be installed in an air conditioned enclosure that also may provide protection from dust particles. Heat generated by the power conversion process may be dissipated into the air conditioned environment through openings in the power conversion cabinets. Excessive heat may be dissipated outside of the enclosure by a liquid cooling system. Each power converter also may include pre-heating elements, such as resistive heaters, to bring the power conversion equipment within an operating temperature range during cold days. The power required to operate these heating and cooling systems, however, may be substantial and may reduce the efficiency of the power conversion system. Existing power conversion equipment also may use special filters so as to prevent the intrusion of dust particles in sensitive electronic areas. The maintenance and repair of these heating and cooling systems also may impact on the output and efficiency of the solar array as a whole and the associated operating costs.

Certain types of geothermal cooling equipment have been used within wind turbines, including power conversion equipment. The wind turbine tower or nacelle, however, generally provides a substitute for an enclosure such that the power conversion equipment is not fully exposed to solar radiation, dust particles, or other environmental stressors. Heat generated in the power conversion process thus may be injected into the wind turbine tower such that the power conversion equipment does not have to be fully enclosed.

There is thus a desire for improved heating and cooling systems to be integrated into a power conversion system. Such heating and cooling systems may reduce dependence of the heating or cooling capacity on ambient conditions and reduce the installed cost per Watt power converted, reduce operating and maintenance costs, and improve the overall efficiency and performance of the system.

Various aspects of the present application thus provide a geothermal heating and cooling system for a power conversion system within an enclosure. The geothermal heating and cooling system may include a heat exchanger positioned about the power conversion system and within the enclosure, one or more pipes positioned within the ground, and a heat transfer medium circulating within the heat exchanger and the pipes so as to transfer heat between the power conversion system and the ground.

The present application further provides a method of thermally controlling a solar power conversion system with a geothermal heating and cooling system. The method may include the steps of providing a heat exchanger of the geothermal heating and cooling system in communication with the solar power conversion system, providing one or more pipes in the ground and in communication with the heat exchanger, and circulating a heat transfer medium between the heat exchanger and the pipes so as to transfer heat between the solar power conversion system and the ground.

The present application further provides a solar power generation system. The solar power generation system may include a solar power conversion system in communication with a photovoltaic array, a heat exchanger positioned about the solar power conversion system, one or more pipes positioned within the ground, and a heat transfer medium circulating within the heat exchanger and the one or more pipes so as to transfer heat between the solar power conversion system and the ground.

Various features and improvements of the present application will become apparent to one of ordinary skill in the art upon review of the following detailed description when taken in conjunction with the several drawings, and the appended claims, in which:
Fig. 1 is a schematic view of the components of a power conversion system as part of a solar power generation system.
Fig. 2 is a schematic view of a geothermal cooling and heating system as is described herein and as may be used with the solar power generation system shown in Fig. 1.

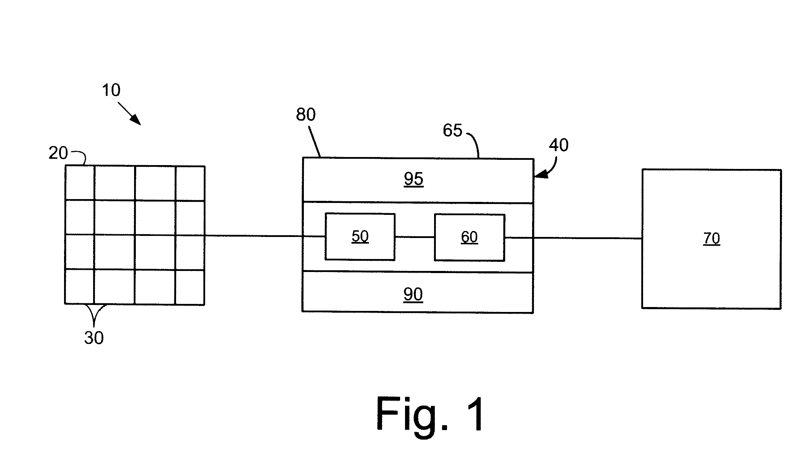

Referring now to the drawings, in which like numerals refer to like elements through the several views, Fig. 1 shows a known solar power generation system 10. The solar power generation system 10 may include one or more photovoltaic arrays 20. The photovoltaic arrays 20 each may have any number of photovoltaic cells 30 in any desired size and/or configuration. As described above, the photovoltaic cells 30 of the photovoltaic array 20 produce variable DC power based upon the local weather and other operating conditions.

The solar power generation system 10 further includes a power conversion system 40. The power conversion system 40 includes the components required to convert the DC power from the photovoltaic array 20 to AC power. In this example, the power conversion system 40 may include a DC to DC converter 50. The DC to DC converter 50 may be coupled to the photovoltaic array 20 so as to condition the DC power. The DC to DC converter 50 may include a switching type regulator so as to regulate the DC voltage using a form of pulse width modulation control and other types of devices. The DC to DC converter 50 also may include a power converter, or step up converter, that may be operable to boost the DC power from a first voltage to a second voltage and the like. Other configurations may be used herein.

The power conversion system 40 further may include a DC to AC inverter 60. The DC to AC inverter 60 may convert the relatively stable DC power produced by the DC to DC converter 50 into AC power. For example, the DC to AC inverter 60 may provide AC power in the form of a 60 Hertz sinusoidal wave and the like. Other types of outputs and configurations may be used herein.

The power conversion system 40 may be housed in an enclosure 65. The enclosure 65 may be largely airtight and/or hermetically sealed so as to eliminate ambient airflow and associated filtering efforts.

The solar power generation system 10 thus provides AC power to a utility grid 70, another type of load, or otherwise as may be desired. Other configurations may be used herein.

The solar power generation system 10 further may include a thermal management system 80. The thermal management system 80 may include one or more heat exchangers 90 positioned within the enclosure 65. The heat exchangers 90 may be liquid to air exchangers, liquid to liquid exchangers, and/or other types of configurations and devices. The heat exchangers 90 function to remove heat from the components of the power conversion system 40 in a conventional manner as described above (above ground). Other types of cooling systems may be used herein.

The thermal management system 80 further may include one or more heaters 95 positioned about the power conversion system 40 to warm the components therein. The heater 95 may be a resistive type device or other type of heating device. Alternatively, the thermal management system 80 also may use heat exchangers 90 so as to provide heat. Other types of heating systems may be used herein. The thermal management system 80 may be powered by the overall solar power generation system 10 or otherwise by an external source.

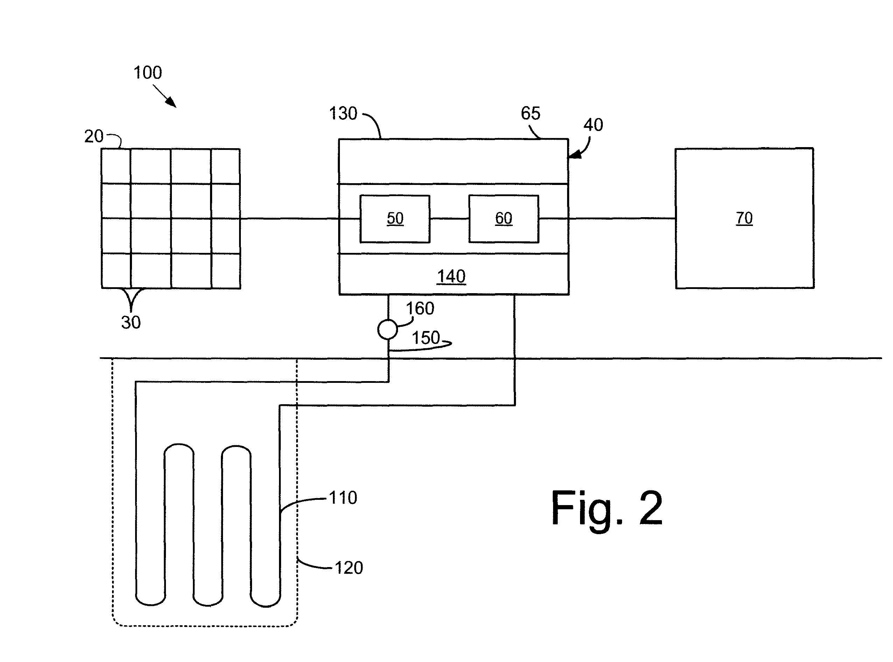

Fig. 2 shows a geothermal cooling and heating system 100 as is described herein. The geothermal cooling and heating system 100 may be used with the solar power generation system 10 largely as described above and/or with similar types of components. Specifically, the solar power generation system 10 may include the photovoltaic array 20 in communication with the power conversion system 40 within the enclosure 65. The enclosure 65 may be largely airtight and/or hermetically sealed. The solar power generation system 10 thus may provide AC power to the utility grid 70 as described above.

The geothermal cooling and heating system 100 may include a number of pipes 110. The pipes 110 may be largely buried in the ground 120 in a trench or the like such that the ground 120 acts as a heat source or heat sink. The pipes 110 may be arranged in a closed loop field, an open loop field, a horizontal closed loop field, a vertical closed loop field, a slinky closed loop field, or in any desired configuration. The pipes 110 also may be positioned within a water source so as to use the water source as the heat source or heat sink. The pipes 110 may have any length, diameter, and configuration. Any number of pipes 110 may be used. The pipes 110 may extend about ten (10) feet (about three (3) meters) into the ground 120 although any depth below the frost line may be used. One set of pipes 110 of a geothermal system 100 may be used with several solar power generation systems 10, power conversion systems 40, and the like.

The geothermal system 100 further may include a thermal management system 130. The thermal management system 130 may be largely similar to the thermal management system 80 described above and the like. The thermal management system 130 may be positioned within the enclosure 65 about the power conversion system 40 of the solar power generation system 10 so as to exchange heat therewith. The thermal management system 130 may include a heat exchanger 140 in communication with the pipes 110. The heat exchanger 140 may be a liquid to air exchanger, a liquid to liquid exchanger, and/or other types of configurations and devices. The heat exchanger 140 may be in the form of a cold plate, a series of coils, or any desired configuration or combinations thereof.

The geothermal system 100 may include a thermal transfer medium 150 running through the pipes 110 and the heat exchanger 140. The thermal transfer medium may be ionized water, de-ionized water, antifreeze, oil, or any desired medium. The thermal transfer medium 150 may be electrically conductive or non-conductive. The thermal transfer medium 150 may be pumped through the pipes 110 and the heat exchanger 140 via a pump 160 or a similar type of fluid movement device.

In use, the upper ten (10) feet (about three (3) meters) of the ground 120 maintains a nearly constant temperature of between about 50 and 60 degrees Fahrenheit (about 10 to 16 degrees Celsius) and may serve as the heat source or heat sink depending upon the weather conditions on the surface. The thermal transfer medium 150 thus may be pumped through the pipes 110 in the ground 120 and through the heat exchanger 140 positioned about the power conversion system 40. The geothermal system 100 thus may transfer the heat generated by the power conversion system 40 to the ground 120 when the ground 120 is cooler than the surface and/or the components. In other words the heat generated by the DC to DC converter 50, the DC to AC inverter 60, and other types of conversion components such as the semiconductors, the inductors, the capacitors, and the like within the enclosure 65 may be transferred to the ground 120 where the heat may be dissipated within the pipes 110. Likewise, heating also may be provided to the power conversion system 40 when the ground 120 is warmer than the surface and/or the components.

The geothermal system 100 thus may provide a constant inflow temperature to the power conversion system 40 and other components of the solar power generation system 10 irrespective of environmental conditions. The cooling and heating equipment 90, 95 formerly used for large temperature variations thus may be avoided as well as the associated operating and maintenance costs. The overall solar power generation system 10 thus may be designed for a narrow temperature range so as to minimize further the costs.

Although the geothermal system 100 has been described in the context of the solar power generation system 10, the system 100 may be applicable to battery storage applications, electric generator applications, fuel cell applications, high voltage DC transmission systems, variable speed drives, and the like. Specifically, the geothermal system 100 may be used in any solar application and any other application in which the power conversion systems and other systems may be enclosed and/or not in contact with the outside environment.

It should be apparent that the foregoing relates only to certain embodiments of the present application and that numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A geothermal heating and cooling system for a power conversion system within an enclosure, comprising:
   a heat exchanger positioned about the power conversion system and within the enclosure;
   one or more pipes positioned within the ground; and,
   a heat transfer medium circulating within the heat exchanger and the one or more pipes so as to transfer heat between the power conversion system and the ground.
2. The geothermal heating and cooling system of clause 1, wherein the one or more pipes extend about ten (10) feet (about three (3) meters) into the ground.
3. The geothermal heating and cooling system of any preceding clause, wherein the heat transfer medium comprises ionized water, de-ionized water, antifreeze, and/or oil.
4. The geothermal heating and cooling system of any preceding clause, further comprising a pump in communication with the heat transfer medium.
5. The geothermal heating and cooling system of any preceding clause, wherein the power conversion system comprises an inverter and wherein the heat exchanger is positioned about the inverter for heat transfer therewith.
6. The geothermal heating and cooling system of any preceding clause, wherein the one or more pipes are in communication with a plurality of heat exchangers.
7. The geothermal heating and cooling system of any preceding clause, wherein the ground comprises a heat sink and the power conversion system comprises a heat source.
8. The geothermal heating and cooling system of any preceding clause, wherein the ground comprises a heat source and the power conversion system comprises a heat sink.
9. The geothermal heating and cooling system of any preceding clause, wherein the power conversion system is in communication with a solar power generation system.
10. The geothermal heating and cooling system of any preceding clause, wherein the enclosure comprises an airtight enclosure.
11. A method of thermally controlling a solar power conversion system with a geothermal heating and cooling system, comprising:
   providing a heat exchanger of the geothermal heating and cooling system in communication with the solar power conversion system;
   providing one or more pipes in the ground and in communication with the heat exchanger; and,
   circulating a heat transfer medium between the heat exchanger and the one or more pipes so as to transfer heat between the solar power conversion system and the ground.
12. The method of any preceding clause, wherein the step of circulating a heat transfer medium between the heat exchanger and the one or more pipes so as to transfer heat between the solar power conversion system and the ground comprises transferring heat from the solar power conversion system to the ground.
13. The method of any preceding clause, wherein the step of circulating a heat transfer medium between the heat exchanger and the one or more pipes so as to transfer heat between the solar power conversion system and the ground comprises transferring heat to the solar power conversion system from the ground.
14. A solar power generation system, comprising:
   a solar power conversion system in communication with a photovoltaic array;
   a heat exchanger positioned about the solar power conversion system;
   one or more pipes positioned within the ground; and,
   a heat transfer medium circulating within the heat exchanger and the one or more pipes so as to transfer heat between the solar power conversion system and the ground.
15. The solar power generation system of any preceding clause, wherein the solar power conversion system comprises an inverter.
16. The solar power generation system of any preceding clause, wherein the one or more pipes extend about ten (10) feet (about three (3) meters) into the ground.
17. The solar power generation system of any preceding clause, wherein the heat transfer medium comprises ionized water, de-ionized water, antifreeze, and/or oil.
18. The solar power generation system of any preceding clause, further comprising a pump in communication with the heat transfer medium.
19. The solar power generation system of any preceding clause, wherein the ground comprises a heat sink and the solar power conversion system comprises a heat source.
20. The solar power generation system of any preceding clause, wherein the ground comprises a heat source and the solar power conversion system comprises a heat sink.

## Claims

1. A geothermal heating and cooling system (100) for a power conversion system (40) within an enclosure (65), comprising:
a heat exchanger (140) positioned about the power conversion system (40) and within the enclosure (65);
one or more pipes (110) positioned within the ground (120); and
a heat transfer medium (150) circulating within the heat exchanger (140) and the one or more pipes (110) so as to transfer heat between the power conversion system (40) and the ground (120).

2. The geothermal heating and cooling system (100) of claim 1, wherein the one or more pipes (110) extend about ten (10) feet (about three (3) meters) into the ground (120).

3. The geothermal heating and cooling system (100) of any preceding claim, wherein the heat transfer medium (150) comprises ionized water, de-ionized water, antifreeze, and/or oil.

4. The geothermal heating and cooling system (100) of any preceding claim, further comprising a pump (160) in communication with the heat transfer medium (150).

5. The geothermal heating and cooling system (100) of any preceding claim, wherein the power conversion system (40) comprises an inverter (60) and wherein the heat exchanger (140) is positioned about the inverter (60) for heat transfer therewith.

6. The geothermal heating and cooling system (100) of any preceding claim, wherein the one or more pipes (110) are in communication with a plurality of heat exchangers (140).

7. The geothermal heating and cooling system (100) of any preceding claim, wherein the ground (120) comprises a heat sink and the power conversion system (40) comprises a heat source.

8. The geothermal heating and cooling system (100) of any preceding claim, wherein the ground (120) comprises a heat source and the power conversion system (40) comprises a heat sink.

9. The geothermal heating and cooling system (100) of any preceding claim, wherein the enclosure (65) comprises an airtight enclosure (65).

10. A method of thermally controlling a solar power conversion system (40) with a geothermal heating and cooling system (100), comprising:
providing a heat exchanger (140) of the geothermal heating and cooling system (100) in communication with the solar power conversion system (40);
providing one or more pipes (110) in the ground (120) and in communication with the heat exchanger (140); and
circulating a heat transfer medium (150) between the heat exchanger (140) and the one or more pipes (110) so as to transfer heat between the solar power conversion system (40) and the ground (120).
